# EUROPEAN PATENT APPLICATION

(11) **EP 4 749 398 A1**
(43) Date of publication of application: **27.05.2026**
(21) Application number: 25217682.1
(22) Date of filing: 21.11.2025
(51) Int. Cl.: G06F 1/3231, G06F 1/3234, G06F 1/3287, G06V 40/16

(54) **DEVICE FOR REDUCING STANDBY POWER AND OPERATING METHOD THEREOF**

(30) Priority: 22.11.2024 KR 20240168040; 27.02.2025 KR 20250025634
(71) Applicant: LG Electronics Inc., Yeongdeungpo-gu Seoul 07336 (KR)
(72) Inventor: YEO, Changjun, 07796 Seoul (KR); YOON, Sangho, 07796 Seoul (KR); HA, Junwoo, 07796 Seoul (KR); LEE, Seunghwan, 07796 Seoul (KR)
(74) Representative: Vossius & Partner Patentanwälte Rechtsanwälte mbB

(57) **Abstract**

Provided is a device for reducing standby power including a memory, and a processor, wherein the processor identifies whether a first user input is received via an input device for a preset first time period while a display is turned on and a screen is displayed, obtains a first image capturing a space ahead of the display when the first user input is not received, and controls on/off of the display depending on whether a user's face is included in the first image or whether the user's face included in the first image is recognized as an authenticated user.

## Description

### TECHNICAL FIELD

The present application relates to a device for reducing standby power and an operating method thereof.

### BACKGROUND

In general, with a development of technology and an improvement of living standards, electronic products such as a personal computer (hereinafter, referred to as a PC), a display device (a TV, a monitor, and the like), a VCR, and a DVD have been broadly distributed. In particular, the display device is used not only in a general home but also in various environments such as an office and a school, and a range of use thereof is continuously expanding. Such a display device mainly serves to provide visual information via a screen, and occupies a significant portion in a total power consumption of an electronic device.

Various methods have been proposed to reduce unnecessary power consumption of the electronic device, and one of them is an automatic on/off function of the display. An existing power saving method is implemented by automatically turning off the display after a predetermined time elapses. For example, when a user does not manipulate an input device for the predetermined time, a system determines that the user is not using the electronic device and automatically turns off the display. This method is useful for preventing the unnecessary power consumption, but there is a limitation in that it does not sufficiently reflect an actual user environment.

To solve this problem, an automatic on/off function based on a time concept set by the user has been introduced, but this method is also an inefficient method that does not reflect a user's state in real time. For example, even when the user sleeps within 5 minutes after setting an automatic power-off time to 30 minutes, the display operates unnecessarily for the remaining 25 minutes.

Therefore, the existing power saving method does not sufficiently reflect a user's actual usage behavior, and needs improvement in terms of power saving and convenience improvement. Accordingly, a new method capable of minimizing the power consumption using a more sophisticated user sensing technology is required.

### [Prior Art Literature]

### [Patent document]

Korean Patent No. 10-1349406 (2014.01.02)

### TECHNICAL PROBLEM

The present disclosure is to provide a device for reducing standby power and an operating method thereof.

Problems to be solved in the present disclosure are not limited to the above-mentioned problems, and other problems not mentioned will be clearly understood by those skilled in the art to which the present disclosure belongs from the description below.

### TECHNICAL SOLUTION

According to various embodiments, a device for reducing standby power includes a memory, and a processor, and the processor identifies whether a first user input is received via an input device for a preset first time period while a display is turned on and a screen is displayed, obtains a first image capturing a space ahead of the display when the first user input is not received, and controls on/off of the display depending on whether a user's face is included in the first image or whether the user's face included in the first image is recognized as an authenticated user.

According to various embodiments, an operating method of a device for reducing standby power includes identifying whether a first user input is received via an input device for a preset first time period while a display is turned on and a screen is displayed, obtaining a first image capturing a space ahead of the display when the first user input is not received, and controlling on/off of the display depending on whether a user's face is included in the first image or whether the user's face included in the first image is recognized as an authenticated user.

### ADVANTAGEOUS EFFECTS

According to various embodiments, the device and the operating method thereof determine the absence of the user and control the display to be turned off, thereby reducing the standby power and providing the security effect to the user device.

According to various embodiments, the device and the operating method thereof may reduce the standby power more efficiently and enhance the security of the user device because not only whether the user simply exists, but also who the real user is considered by utilizing the authenticated user data.

Effects obtainable in the present disclosure are not limited to the above-mentioned effects, and other effects not mentioned may be clearly understood by those skilled in the art to which the present disclosure pertains from the following description.

### BRIEF DESCRIPTION OF THE DRAWINGS

FIG. 1 is a diagram for illustrating an example of a configuration of a device for reducing standby power according to various embodiments.
FIG. 2 is a flowchart illustrating an example of an operation for reducing standby power of a device according to various embodiments
FIG. 3 is a flowchart illustrating an example of an operation for reducing standby power of a device when authenticated user data is not obtained, according to various embodiments.
FIG. 4 is a flowchart illustrating an example of an operation for reducing standby power of a device when authenticated user data is obtained according to various embodiments.
FIG. 5 is a flowchart illustrating an example of an operation for additionally identifying whether a device has received a user input when authenticated user data is not obtained according to various embodiments.
FIG. 6 is a flowchart illustrating an example of an operation for additionally identifying whether a device has received a user input when authenticated user data is obtained according to various embodiments.
FIG. 7 is a flowchart illustrating an example of an operation for additionally obtaining an image of a device according to various embodiments.
FIG. 8 is a flowchart illustrating an example of an operation of identifying whether a user input is received for a time period set for an authenticated user of a device according to various embodiments.
FIG. 9 is a diagram for illustrating an example of an operation of identifying whether a user input is received for a time period set for an authenticated user of a device according to various embodiments.
FIG. 10 is a diagram for illustrating an example of a user interface for activating a standby power reduction function of a device according to various embodiments.
FIG. 11 is a diagram for illustrating an example of a user interface for activating a standby power reduction function of a device according to various embodiments.
FIG. 12 is a flowchart illustrating an example of an operation for obtaining authenticated user data of a device according to various embodiments.
FIG. 13 is a diagram for illustrating an example of an operation for obtaining authenticated user data of a device according to various embodiments.
FIG. 14 is a diagram for illustrating an example of an operation for obtaining authenticated user data of a device according to various embodiments.
FIG. 15 is a diagram for illustrating an effect of a standby power reduction function of a device according to various embodiments.

### DETAILED DESCRIPTION

A device according to various embodiments disclosed in the present document may be various types of electronic devices. The device may include, for example, a portable communication device (e.g., a smartphone), a computer device, a portable multimedia device, a portable medical device, a camera, a wearable device, or a home appliance. The device according to an embodiment of the present disclosure is not limited to the above-described devices.

The various embodiments of the present document and terms used therein are not intended to limit technical features described in the present document to specific embodiments, and it should be understood that they include various changes, equivalents, or substitutes of the corresponding embodiments. In connection with the description of the drawings, similar reference numerals may be used for similar or related components. A singular form of a noun corresponding to an item may include one or a plurality of items unless the context clearly indicates otherwise.

In the present document, each of phrases, such as "A or B", "at least one of A and B", "at least one of A or B", "A, B or C", "at least one of A, B, and C", and "at least one of A, B, or C" may include any one of items listed together with the corresponding phrase among the phrases, or all possible combinations thereof. Terms such as "first" or "second" may be used to simply distinguish a corresponding component from another corresponding component, and the corresponding components are not limited in other aspects (e.g., importance or order).

In the present document, when it is stated that a certain (e.g., first) component is coupled with/to or connected to another (e.g., second) component with a term "operatively" or "communicatively" or without such term, it means that the certain components may be connected to said another component directly (e.g., by wire), wirelessly, or via a third component.

A term "module" used in the various embodiments of the present document may include a unit implemented in hardware, software, or firmware, and may be used interchangeably with terms such as, for example, logic, a logic block, a part, or a circuit. The module may be an integrally constructed part or a minimum unit of the part or a portion thereof that performs one or more functions. For example, according to an embodiment, the module may be implemented in a form of an application-specific integrated circuit (ASIC).

The various embodiments of the present document may be implemented as software (e.g., a program) including one or more instructions stored in a storage medium (e.g., an internal memory) or an external memory that may be read by a machine (e.g., an electronic device). For example, a processor (e.g., a processor) of a device (e.g., an electronic device) may call at least one command among the stored one or more instructions from the storage medium and execute the at least one command. This enables the device to be operated to perform at least one function based on the called at least one instruction. The one or more instructions may include a code generated by a compiler or a code that may be executed by an interpreter. The machine-readable storage medium may be provided in a form of a non-transitory storage medium. Here, the term "non-transitory" only means that the storage medium is a tangible device and does not include a signal (e.g., an electromagnetic wave), and the term does not distinguish between a case in which data is semi-permanently stored in the storage medium and a case in which data is temporarily stored.

A method according to various embodiments disclosed in the present document may be provided by being included in a computer program product. The computer program product may be traded between a seller and a buyer as a commodity. The computer program product may be distributed in a form of a device-readable storage medium (e.g., a compact disc read only memory (CD-ROM)), or may be distributed online (e.g., downloaded or uploaded) via an application store (e.g., play storeTM) or directly between two user devices (e.g., smart phones). In the case of online distribution, at least a portion of the computer program product may be temporarily stored in a device-readable storage medium such as a memory of a server of a manufacturer, a server of the application store, or a relay server, or may be temporarily generated.

According to various embodiments, each (e.g., the module or the program) of the above-described components may include a single or a plurality of entities, and some of the plurality of entities may be separately disposed in another component. According to various embodiments, one or more of the above-described corresponding components or operations may be omitted, or one or more other components or operations may be added. Alternatively or additionally, a plurality of components (e.g., the modules or the programs) may be integrated into one component. In this case, the integrated component may perform one or more functions of each of the plurality of components in the same or similar manner as that performed by the corresponding component among the plurality of components before the integration. According to various embodiments, operations performed by the module, the program, or other components may be executed in a sequential, parallel, repeated, or heuristic manner, one or more of the operations may be executed in a different order or omitted, or one or more other operations may be added.

Hereinafter, an example of a configuration of a device 100 for reducing standby power according to various embodiments will be described.

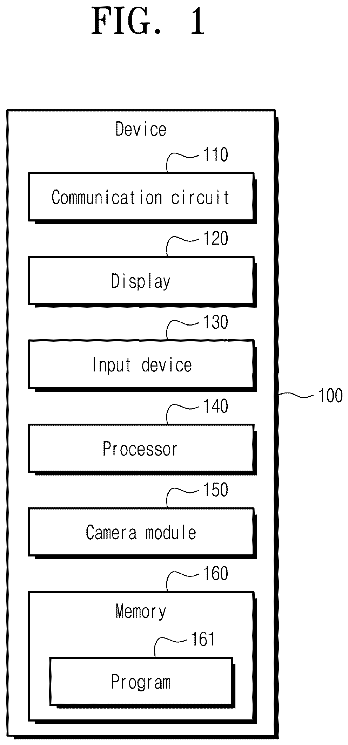

FIG. 1 is a diagram for illustrating an example of a configuration of the device 100 for reducing standby power according to various embodiments.

According to various embodiments, referring to FIG. 1, the device 100 may include a communication circuit 110, a display 120, an input device 130, a processor 140, a camera module 150, and a memory 160 storing a program 161. However, the present disclosure may not be limited to the illustrated and/or described example, and the device 100 may be implemented to include more components and/or fewer components.

According to various embodiments, the device 100 may be a device including the display 160. For example, the device 100 may include a wearable device such as a PC, a laptop, a smart phone, and a head-mounted display (HMD) device, but may not be limited to the described example, and may further include a type of device capable of displaying a graphic user interface (GUI) and receiving an input of a user.

According to various embodiments, the communication circuit 110 may support establishing a wireless communication channel between the device 100 and a server or an external device and performing communication via the established communication channel. The communication circuit 110 may include one or more communication processors that are operated independently of the processor 120 and support wireless communication.

According to various embodiments, the display 120 may be implemented to display an interface (or the graphic user interface or an execution screen) provided from the device 100.

According to various embodiments, the input device 130, as a device for receiving the input from the user, may include a touch screen for receiving a touch input of the user, a keyboard, a mouse, a camera for capturing and recognizing a gesture input of the user, a microphone for receiving a voice of the user, and the like. In this regard, the touch screen may be implemented integrally with the display 120.

According to various embodiments, the processor 140 may, for example, execute software to control at least one other component (e.g., a hardware or software component) of the device 100 connected to the processor 140, and may perform various data processing or operations. According to an embodiment, as at least a portion of the data processing or operations, the processor 140 may load a command or data received from another component (e.g., the communication circuit 110) in a volatile memory, process the command or the data stored in the volatile memory, and store result data in a non-volatile memory. According to an embodiment, the processor 140 may include a main processor (e.g., a central processing unit or an application processor) and an auxiliary processor (e.g., a graphic processing unit, an image signal processor, a sensor hub processor, or a communication processor) that is operable independently of or together with the main processor. Additionally or alternatively, the auxiliary processor may be set to use less power than the main processor, or to be specialized for a specified function. The auxiliary processor may be implemented separately from, or as a portion of, the main processor.

According to various embodiments, the camera module 150, as a digital camera including an image sensor, may include an image processor. The image sensor, as a device that converts an optical image into an electrical signal, may be equipped as a chip in which multiple photodiodes are integrated. For example, the image sensor may include a charge coupled device (CCD), a complementary metal oxide semiconductor (CMOS), and the like. In one example, the processor 140 may image-process a captured result and generate image information.

According to various embodiments, the memory 160 may store various types of programs (e.g., an operating system or the like) for operating the device 100. In this regard, the program 161 stored in the memory 160, as a program for providing a standby power reduction function, may, when executed, activate the standby power reduction function as the device 100 is connected to the server (or establish communication with the server) or the program 161 is implemented in an on-device type and the above-described interface (or the execution screen) is received and displayed. According to various embodiments, the memory 160 may be implemented to store various types of information associated with the standby power reduction function. For example, the various types of information may include authenticated user data, image data, and the like.

Hereinafter, an example of an operation of the device 100 according to various embodiments will be described.

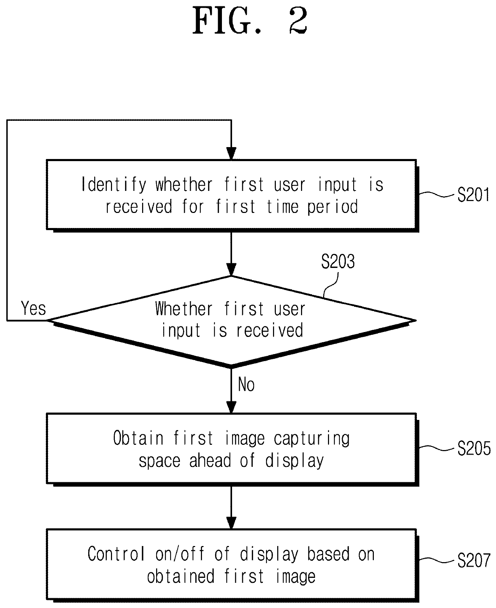

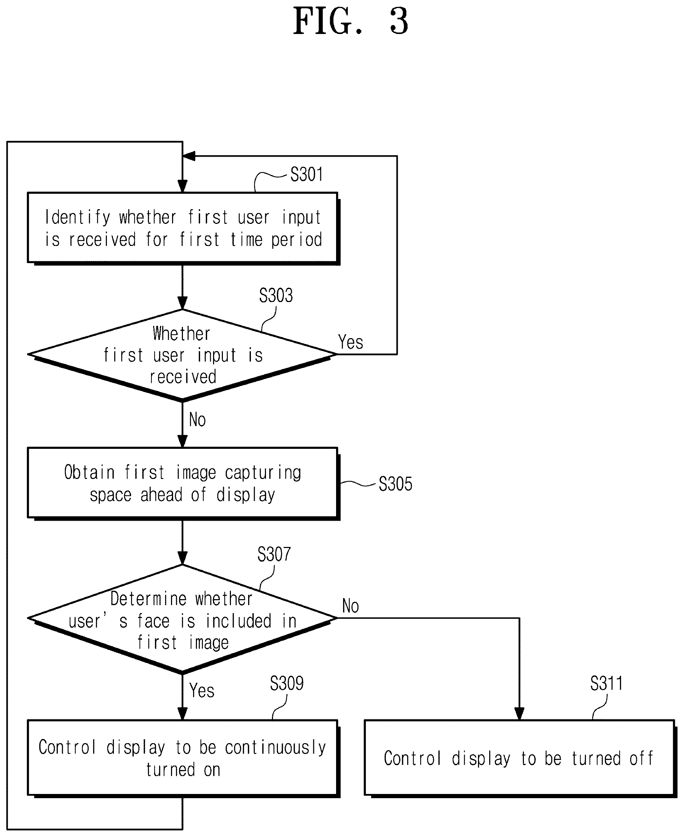

FIG. 2 is a flowchart illustrating an example of an operation for reducing standby power of the device 100 according to various embodiments. Operations may be performed irrespective of an order of the illustrated and/or described operations, and more operations may be performed and/or fewer operations may be performed. Hereinafter, FIG. 2 will be described with reference to FIGS. 3 to 4.

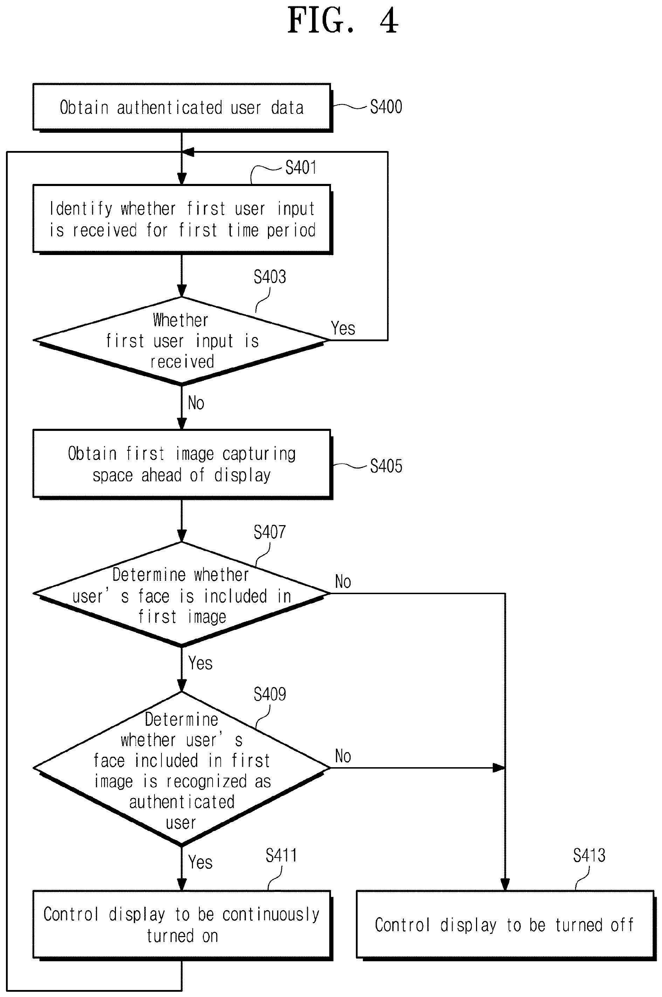

FIG. 3 is a flowchart illustrating an example of an operation for reducing standby power of a device when authenticated user data is not obtained, according to various embodiments. FIG. 4 is a flowchart illustrating an example of an operation for reducing standby power of a device when authenticated user data is obtained according to various embodiments.

According to various embodiments, in operation S201, the device 100 may identify whether a first user input is received via the input device 130 for a preset first time period while the display 120 is turned on and the screen is displayed. For example, the state in which the display 120 is turned on and the screen is displayed may be a state in which a main operation of the display 120 is performed. For example, the state in which the display 120 is turned on and the screen is displayed may be an active mode among power management modes of the device 100. For example, the preset first time period may be set to a time period for the device 100 to perform the operation for reducing the standby power when the user does not provide the input for a predetermined time period. For example, the first user input, as a signal input by the user via the input device 130 such as the touch screen, the keyboard, the mouse, the camera, the microphone, and the like, may be a factor for determining whether the user is using the device 100.

According to various embodiments, the preset first time period may be set differently depending on a network connected to the device 100. For example, the preset first time period may be set differently depending on whether the device 100 and the network are connected to each other. For example, the preset first time period may be set differently depending on a type of the network connected to the device 100. For example, the preset first time period may be set to a shorter time period when the network connected to the device 100 is a public network than when the network is a private network. As such, by setting the time period differently in consideration of a security level, accessibility, or the like of the network, the standby power may be efficiently reduced while maintaining security of the device 100.

According to various embodiments, the preset first time period may be set differently depending on a power supply method of the device 100. For example, the preset first time period may be set to a shorter time period when the power is supplied from an internal battery included in the device than when the power is supplied from an external power source (e.g., an outlet). As such, by setting the time period differently in consideration of stability of the power supply method or whether charging is performed, the standby power of the device 100 may be efficiently reduced.

According to various embodiments, in operation S203, the device 100 may re-perform operation S201 when the first user input is received, and may perform operation S205 when the first user input is not received. This is to return to the step of waiting for the user input as it is determined that the user is using the device 100 when the first user input is received, and to proceed with a step of determining whether the user is located ahead as it is determined that the user is not using the device 100 when the first user input is not received.

According to various embodiments, in operation S205, when the first user input is not received, the device 100 may obtain a first image obtained by capturing a space ahead of the display 120. For example, the first image may mean a medium visually expressed via the display, and may include an image, a video, and the like, but may not be limited thereto. For example, the first image may include consecutive image frames.

According to various embodiments, in operation S207, the device 100 may control on/off of the display based on the obtained first image. According to various embodiments, the device 100 may control the on/off of the display depending on whether a user's face is included in the first image. According to various embodiments, the device 100 may control the on/off of the display depending on whether the user's face included in the first image is recognized as an authenticated user. For example, the off state of the display 120 may be a state in which the main operation of the display 120 is not performed. For example, the off state of the display 120 may be a screen off mode among the power management modes of the device 100. For example, the off state of the display 120 may be a sleep mode among the power management modes of the device 100. For example, the off state of the display 120 may be a modern standby mode among the power management modes of the device 100. Details of operation S207 will be described later.

Hereinafter, an example of an operation for reducing the standby power of the device 100 when the authenticated user data is not obtained will be described.

According to various embodiments, referring to FIG. 3, the device 100 may identify whether the first user input is received via the input device for the preset first time period while the display 120 is turned on and the screen is displayed in operation S301, may re-perform operation S301 when the first user input is received in operation S303, and may obtain the first image obtained by capturing the space ahead of the display 120 when the first user input is not received in operation S305. Operations S301 to S305 of the device 100 may be performed as described above, and thus, redundant descriptions thereof will be omitted.

According to various embodiments, in operation S307, the device 100 may determine whether the user's face is included in the first image. For example, the device 100 may extract a unique feature point (e.g., an eye, a nose, a mouth, an outline, and the like) of a face, and compare the extracted feature point with an object included in the first image to determine whether the object corresponds to the face. According to various embodiments, the device 100 may determine whether the user's face is included in the first image using an artificial intelligence model. For example, the device 100 may determine whether the user's face is included in the first image using a face detection model.

According to various embodiments, the first image may include the consecutive image frames. According to various embodiments, in operation S307, the device 100 may determine whether the user's face is included in at least one of the consecutive image frames included in the first image. According to various embodiments, in operation S307, the device 100 may determine whether the user's face is included in the first image depending on whether the user's face is included in the at least one of the consecutive image frames. For example, when the user's face is included in the at least one of the consecutive image frames, the device 100 may determine that the user's face is included in the first image. For example, when it is determined that the user's face is not included in one of the consecutive image frames, the device 100 may determine that the user's face is not included in the first image.

According to various embodiments, the device 100 may control the display 120 to be continuously turned on when the user's face is included in the first image in operation S309, and may control the display 120 to be turned off when the user's face is not included in the first image in operation S311. For example, when the authenticated user data is not obtained, the device 100 may control the on/off of the display 120 in consideration of only whether the user's face is included in the first image.

Hereinafter, an example of an operation for reducing the standby power of the device 100 when the authenticated user data is obtained will be described.

According to various embodiments, referring to FIG. 4, the device 100 may obtain the authenticated user data in operation S400. For example, the authenticated user data may be various data related to a user who has registered a profile in the device 100. For example, the authenticated user data may include data regarding user personal information, a nickname, an input waiting time, the user's face, and the like.

According to various embodiments, the authenticated user data may include user's face data. For example, the user's face data, as data related to a face of the user who is to register the profile, may be data regarding face images at various angles, feature points extracted from the face at the various angles, and the like. The operation of obtaining the authenticated user data will be described in more detail later.

According to various embodiments, the device 100 may determine whether the first user input is received via the input device for the preset first time period while the display 120 is turned on and the screen is displayed in operation S401, may re-perform operation S401 when the first user input is received in operation S403, may obtain the first image obtained by capturing the space ahead of the display 120 when the first user input is not received in operation S405, and may determine whether the user's face is included in the first image in operation S407. Operations S401 to S407 of the device 100 may be performed as described above, and thus, redundant descriptions thereof will be omitted.

According to various embodiments, in operation S409, when the user's face is included in the first image, the device 100 may determine whether at least one of the user's faces included in the first image is recognized as the authenticated user. For example, the device 100 may extract the unique feature point (e.g., the eye, the nose, the mouth, the outline, and the like) of the face included in the first image, compare the extracted feature point with the authenticated user data, and determine whether the face is recognized as the authenticated user. Specifically, the device 100 may compare the feature point extracted from the face included in the first image with the feature point included in the user's face data of the authenticated user, and match the face included in the first image with the authenticated user's face. According to various embodiments, the device 100 may determine whether the user's face included in the first image is recognized as the authenticated user using the artificial intelligence model. For example, the device 100 may determine whether the user's face included in the first image is recognized as the authenticated user using a face recognition model. As such, by not only simply determining whether the face is included, but also determining whether the face is recognized as the authenticated user, the standby power reduction function may be provided to the user who intends to actually use the device.

According to various embodiments, in operation S411, when at least one of the user's faces included in the first image is recognized as the authenticated user's face, the device 100 may control the display 120 to be turned on. For example, when a plurality of user's faces are included in the first image and one of the plurality of user's faces is recognized as the authenticated user, the device 100 may control the display 120 to be turned on. As such, even when the one face is recognized as the authenticated user, the display may be maintained in the on state, so that the user may utilize the standby power reduction function even in a public place in which the plurality of faces may be included in the image.

According to various embodiments, in operation S413, when the user's face is not included in the first image or the user's face included in the first image is not recognized as the authenticated user, the device 100 may control the display 120 to be turned off. As such, even when the user's face is included in the image, when the user's face is not recognized as the authenticated user, the display 120 may be controlled to be turned off, thereby efficiently reducing the standby power and enhancing the security.

Hereinafter, an example of an operation of waiting for the user input secondarily before controlling the display to be turned off to reduce the standby power of the device 100 will be described.

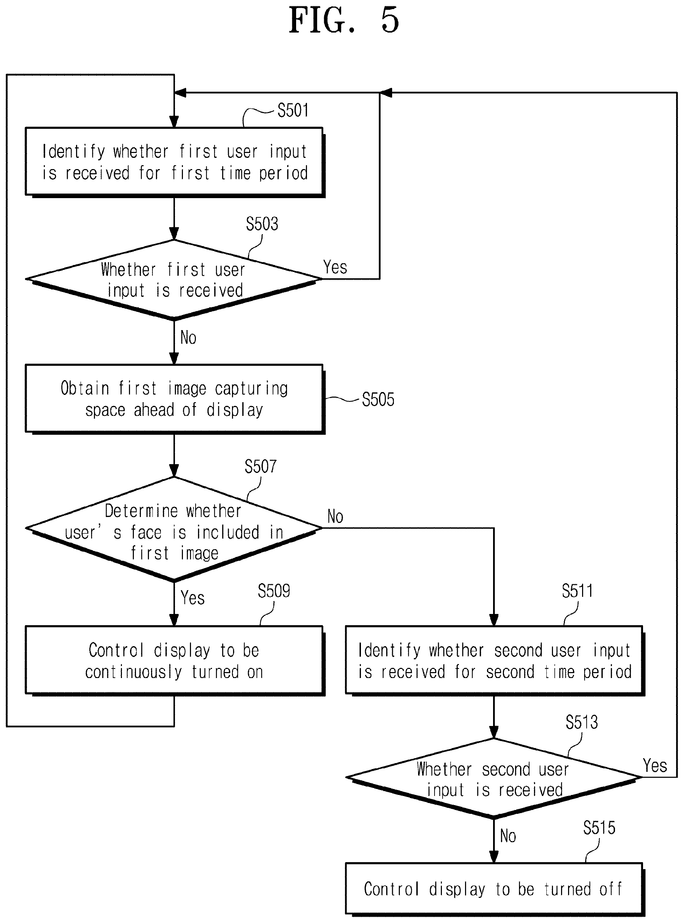

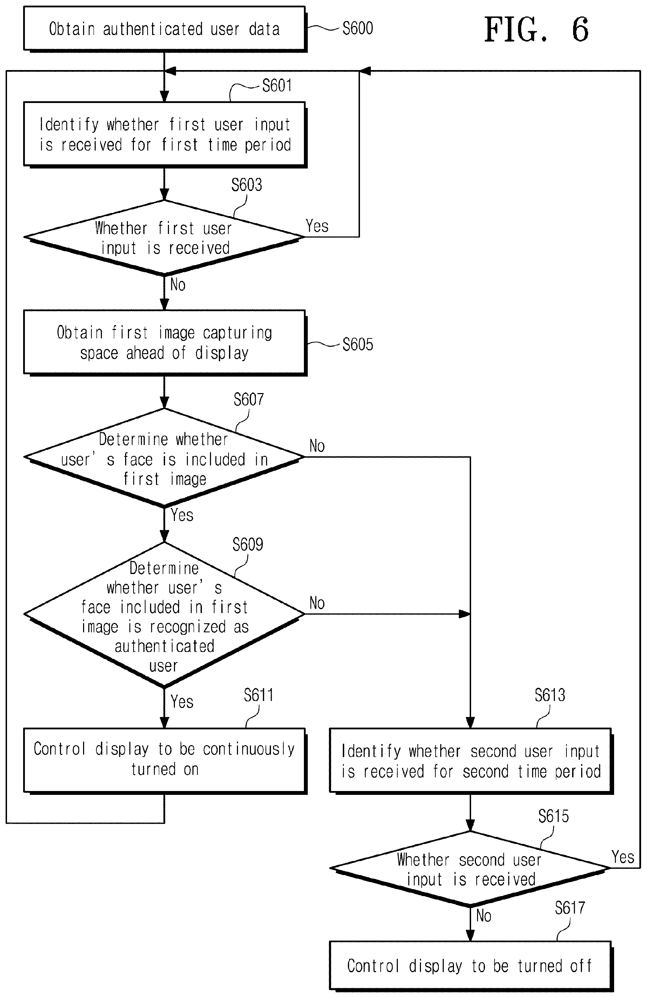

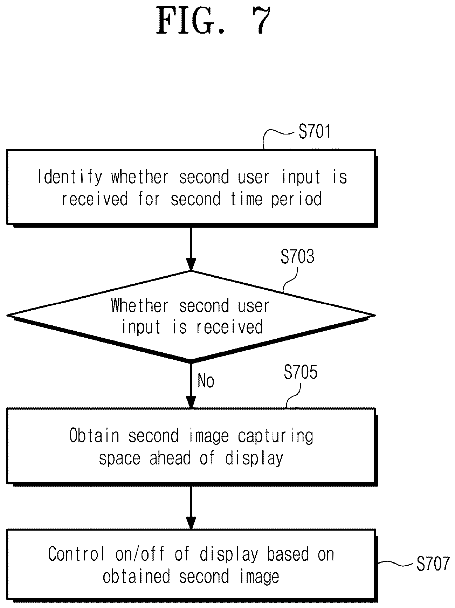

FIG. 5 is a flowchart illustrating an example of an operation for additionally identifying whether the device 100 has received the user input when the authenticated user data is not obtained according to various embodiments. FIG. 6 is a flowchart illustrating an example of an operation for additionally identifying whether the device 100 has received the user input when the authenticated user data is obtained according to various embodiments. FIG. 7 is a flowchart illustrating an example of an operation for additionally obtaining an image of the device 100 according to various embodiments. Operations may be performed irrespective of an order of the illustrated and/or described operations, and more operations may be performed and/or fewer operations may be performed.

According to various embodiments, referring to FIG. 5, the device 100 may identify whether the first user input is received via the input device for the preset first time while the display 120 is turned on and the screen is displayed in operation S501, may re-perform operation S501 when the first user input is received in operation S503, may obtain the first image obtained by capturing the space ahead of the display when the first user input is not received in operation S505, may determine whether the user's face is included in the first image in operation S507, and may control the display 120 to be continuously turned on when the user's face is included in the first image in operation S509. Operations S501 to S509 of the device 100 may be performed as described above, and thus redundant descriptions thereof will be omitted.

According to various embodiments, in operation S511, when the user's face is not included in the first image, the device 100 may identify whether a second user input is received via the input device for a preset second time period. For example, the preset second time period may be set to a time period for the device 100 to perform the operation for reducing the standby power when the user does not provide any input for a predetermined time period. For example, the second time period may be set differently from the first time period. For example, the second time period may be set to a time period shorter than the first time period.

According to various embodiments, the device 100 may re-perform operation S501 when the second user input is received in operation S513, and may control the display 120 to be turned off when the second user input is not received in operation S515. As such, by additionally identifying whether the user input is received, the device may accurately determine absence of the user and perform the operation for reducing the standby power.

According to various embodiments, referring to FIG. 6, the device 100 may obtain the authenticated user data in operation S600, may identify whether the first user input is received via the input device for the preset first time period while the display 120 is turned on and the screen is displayed in operation S601, may re-perform operation S601 when the first user input is received in operation S603, may obtain the first image obtained by capturing the space ahead of the display 120 when the first user input is not received in operation S605, may determine whether the user's face is included in the first image in operation S607, may determine whether the at least one of the user's faces included in the first image is recognized as the authenticated user when the user's face is included in the first image in operation S609, and may control the display 120 to be turned on when the at least one of the user's faces included in the first image is recognized as the authenticated user in operation S611. Operations S600 to S611 of the device 100 may be performed as described above, and thus, redundant descriptions thereof will be omitted.

According to various embodiments, the device 100 may determine whether the second user input is received via the input device for the preset second time period when the user's face is not included in the first image or the user's face included in the first image is not recognized as the authenticated user in operation S613, may re-perform operation S601 when the second user input is received in operation S615, and may control the display 120 to be turned off when the second user input is not received in operation S617. Operations S613 to S617 of the device 100 may be performed as described above, and thus redundant descriptions thereof will be omitted.

According to various embodiments, referring to FIG. 7, the device 100 may identify whether the second user input is received via the input device for the preset second time period in operation S701, may perform operation S705 when the second user input is not received in operation S703, may obtain a second image obtained by capturing the space ahead of the display 120 when the second user input is not received in operation S705, and may control the on/off of the display based on the second image obtained in operation S707. Operations S701 to S707 of the device 100 may be performed similarly to operations S201 to S207 described above, and thus redundant descriptions thereof will be omitted.

Hereinafter, an example of an operation of, when the user's face included in the image of the device 100 is recognized as the authenticated user, identifying whether a next user input is received for a time period set for the authenticated user will be described.

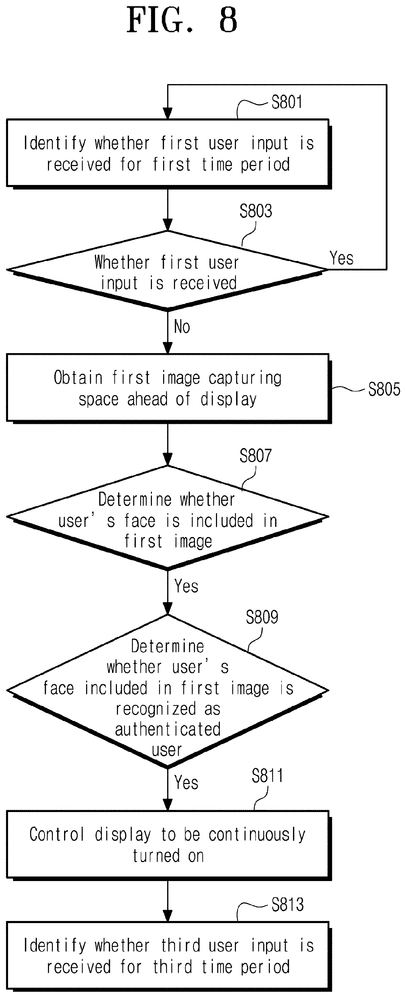

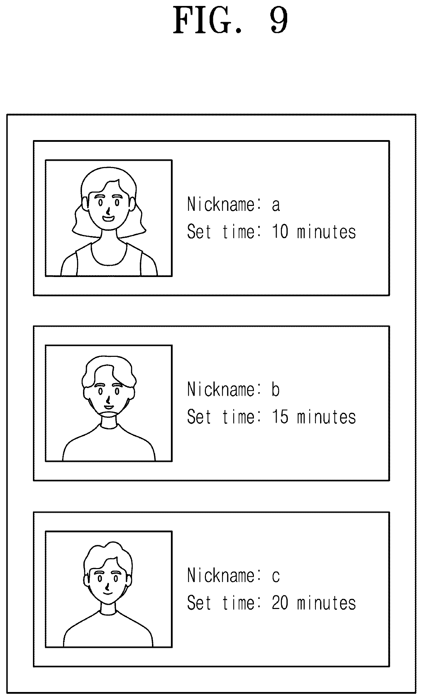

FIG. 8 is a flowchart illustrating an example of an operation of identifying whether a user input is received for a time period set for an authenticated user of the device 100 according to various embodiments. Operations may be performed irrespective of an order of the illustrated and/or described operations, and more operations may be performed and/or fewer operations may be performed. Hereinafter, FIG. 8 will be described with reference to FIG. 9.

FIG. 9 is a diagram for illustrating an example of an operation of identifying whether a user input is received for a time period set for an authenticated user of the device 100 according to various embodiments.

According to various embodiments, the device 100 may identify whether the first user input is received via the input device for the preset first time period while the display 120 is turned on and the screen is displayed in operation S801, may re-perform operation S801 when the first user input is received in operation S803, may obtain the first image obtained by capturing the space ahead of the display when the first user input is not received in operation S805, may determine whether the user's face is included in the first image in operation S807, may determine whether the at least one of the user's faces included in the first image is recognized as the authenticated user when the user's face is included in the first image in operation S809, and may control the display 120 to be turned on when the at least one of the user's faces included in the first image is recognized as the authenticated user in operation S811. Operations S801 to S811 of the device 100 may be performed as described above, and thus redundant descriptions thereof will be omitted.

According to various embodiments, in operation S813, the device 100 may identify whether a third user input is received via the input device for a preset third time period while the display 120 is turned on and the screen is displayed. According to various embodiments, the preset third time period may be a time period set for the authenticated user recognized in operation S809. According to various embodiments, the preset third time period may be a time period set differently for each authenticated user.

According to various embodiments, the preset third time period may be, when there are a plurality of recognized authenticated users, the shortest time period among time periods set for the plurality of authenticated users. For example, referring to FIG. 9, in operation S809, when the user's faces included in the first image are respectively recognized as authenticated users A, B, and C, the preset third time period may be 10 minutes, which is the shortest time period among time periods respectively set for the A, B, and C. For example, in operation S809, when the user's faces included in the first image are respectively recognized as the authenticated users B and C, the preset third time period may be 15 minutes, which is the shortest time period among time periods respectively set for the B and C.

Hereinafter, the user interface (UI) for activating the standby power reduction function of the device 100 will be described.

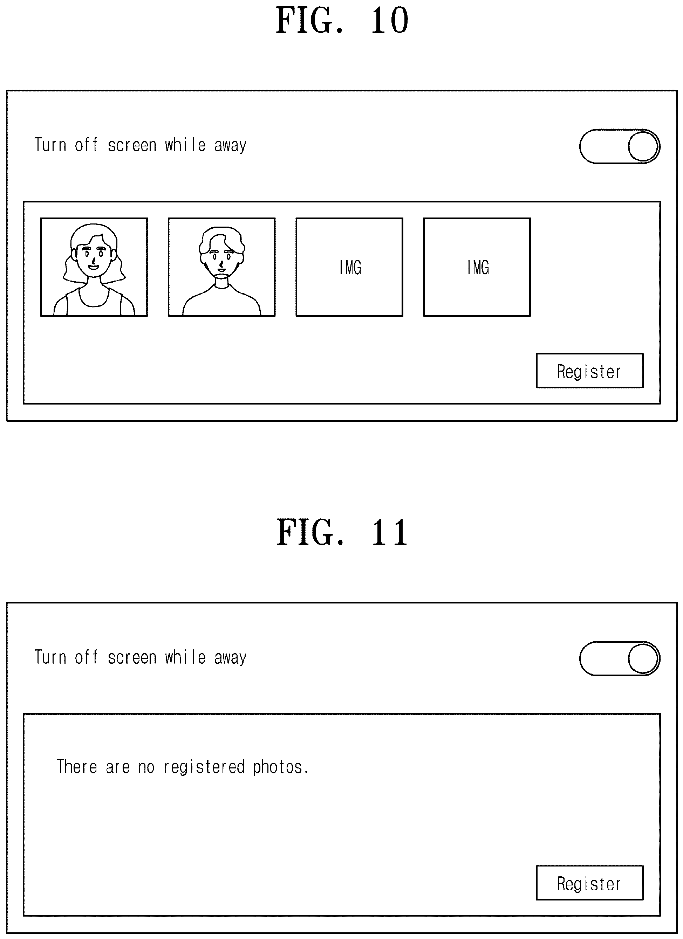

FIGS. 10 and 11 are diagrams for illustrating an example of a user interface for activating a standby power reduction function of the device 100 according to various embodiments.

According to various embodiments, the device 100 may output the user interface for activating the standby power reduction function on the display 120. For example, referring to FIG. 10, the device 100 may output, on the display 120, a user interface indicating whether the standby power reduction function is activated. For example, referring to FIG. 10 or 11, the device 100 may output, on the display 120, a user interface regarding the authenticated user. For example, referring to FIG. 10, it may be identified that two authenticated users are registered, and referring to FIG. 11, it may be identified that no one is registered as the authenticated user.

Hereinafter, an example of an operation for obtaining authenticated user data of the device 100 will be described.

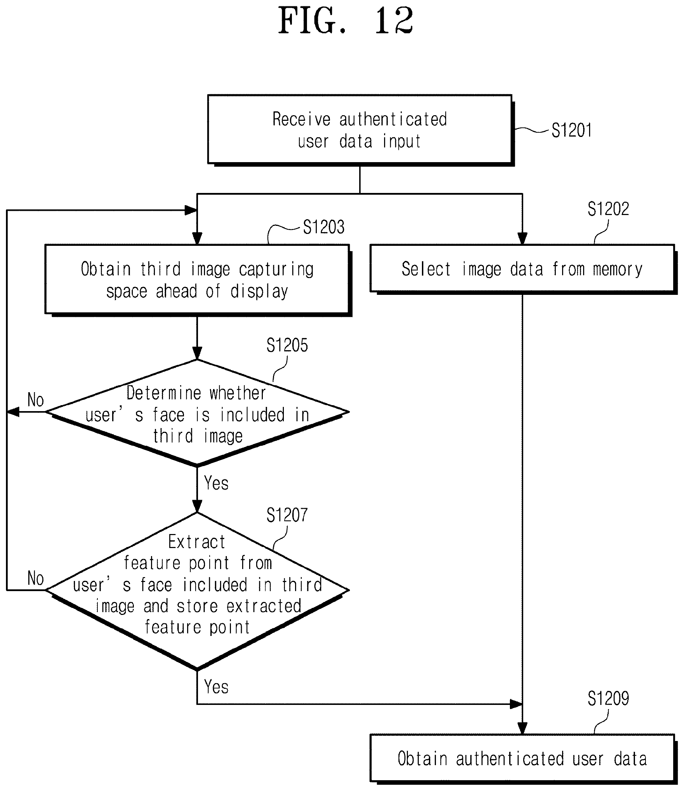

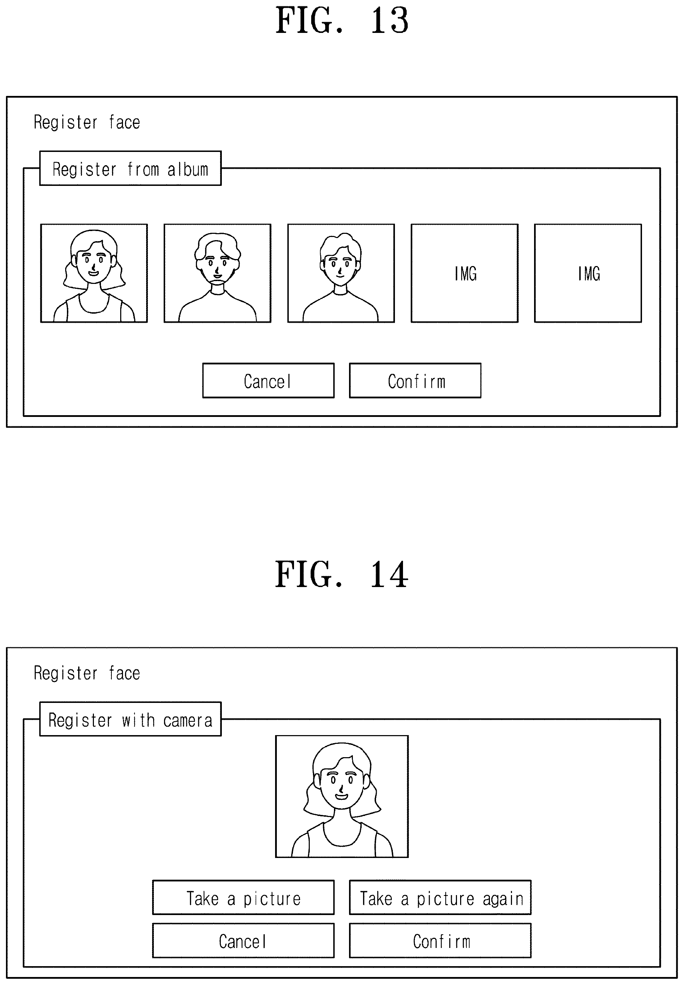

FIG. 12 is a flowchart illustrating an example of an operation for obtaining authenticated user data of the device 100 according to various embodiments. Operations may be performed irrespective of an order of the illustrated and/or described operations, and more operations may be performed and/or fewer operations may be performed. Hereinafter, FIG. 12 will be described with reference to FIGS. 13 to 14.

FIGS. 13 and 14 are diagrams illustrating an example of an operation for obtaining authenticated user data of the device 100 according to various embodiments.

According to various embodiments, in operation S1201, the device 100 may receive an authenticated user data input. According to various embodiments, when receiving the authenticated user data input, the device 100 may obtain a third image or select image data from the memory.

According to various embodiments, in operation S1202, the device 100 may select one of the image data stored in the memory 160. For example, the image data stored in the memory 160 may be the image data regarding the user's face. For example, the image data stored in the memory 160 may include data regarding the feature point extracted from the user's face included in the image data.

According to various embodiments, in operation S1203, the device 100 may obtain the third image obtained by capturing the space ahead of the display 120. According to various embodiments, in operation S1205, the device 100 may determine whether the user's face is included in the third image. According to various embodiments, the device 100 may re-perform operation S1203 when the user's face is not included in the third image, and may extract the feature point from the user's face included in the third image and store the extracted feature point when the user's face is included in the third image in operation S1207. According to various embodiments, when the feature point is not able to be extracted from the user's face included in the third image, the device 100 may re-perform operation S1203.

According to various embodiments, in operation S1209, the device 100 may obtain the authenticated user data generated based on the feature point. For example, the feature point may be the feature point included in the image data stored in the memory 160 or the feature point extracted from the user's face included in the third image.

According to various embodiments, the device 100 may output a user interface for obtaining the authenticated user data on the display 120. For example, referring to FIG. 13, the device 100 may output, on the display 120, a user interface for selecting one of the image data stored in the memory 160. For example, referring to FIG. 14, the device 100 may output a user interface for obtaining the third image on the display 120.

Hereinafter, a standby power reduction effect of the present disclosure will be described.

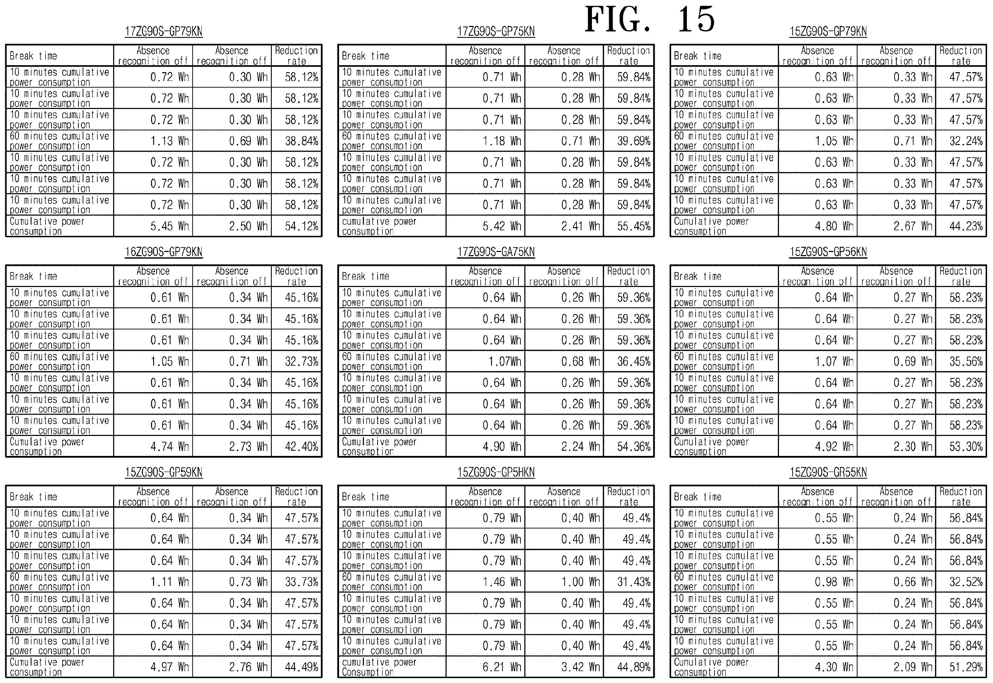

FIG. 15 is a diagram for illustrating an effect of a standby power reduction function of the device 100 according to various embodiments. A table in FIG. 15 shows result values calculated by assuming that daily working hours are set to 8 hours, a lunchtime is to 1 hour, and a break time is to 1 hour, with 10-minute breaks taken each hour. Referring to FIG. 15, when the standby power reduction function is activated in the device 100 according to the present disclosure, it may be identified that there is a power reduction effect of about 42% to 55%.

## Claims

1. A device for reducing standby power, the device comprising:
a memory; and
a processor, wherein the processor is configured to:
identify whether a first user input is received via an input device for a preset first time period while a display is turned on and a screen is displayed;
obtain a first image capturing a space ahead of the display when the first user input is not received; and
control on/off of the display depending on whether a user's face is included in the first image or whether the user's face included in the first image is recognized as an authenticated user.

2. The device of claim 1, wherein the processor is configured to control the display to be turned off when the user's face is not included in the first image.

3. The device of claim 1, or 2, wherein the processor is configured to:
obtain authenticated user data, wherein the authenticated user data includes user's face data; and
control the display to be turned off when the user's face included in the first image is not recognized as the authenticated user.

4. The device of claim 2 or 3, wherein the processor is configured to:
when the user's face is not included in the first image or the user's face included in the first image is not recognized as the authenticated user,
identify whether a second user input is received via the input device for a preset second time period; and
control the display to be turned off when the second user input is not received.

5. The device of claim 4, wherein the processor is configured to:
additionally obtain a second image capturing the space ahead of the display when the second user input is not received; and
control the on/off of the display depending on whether the user's face is included in the second image or whether the user's face included in the second image is recognized as the authenticated user.

6. The device of any one of claims 1 to 5, wherein the processor is configured to:
control the display to be continuously turned on when the user's face included in the first image includes a plurality of faces and at least one of the faces is recognized as the authenticated user; and
identify whether a third user input is received via the input device for a preset third time period while the display is turned on and the screen is displayed,
wherein the third time period is a time period set for the recognized authenticated user.

7. The device of claim 6, wherein when the recognized authenticated user includes a plurality of authenticated users, the third time period is a shortest time period among time periods set for the plurality of authenticated users.

8. The device of any one of claims 1 to 7, wherein the processor is configured to perform determination of whether the user's face is included in the first image or whether the user's face included in the first image is recognized as the authenticated user using an artificial intelligence model.

9. The device of any one of claims 1 to 8, wherein the first time period is set differently depending on a network connected to the device.

10. The device of any one of claims 1 to 9, wherein the first time period is set differently depending on a power supply method of the device.

11. The device of any one of claims 1 to 10, wherein the processor is configured to output, on the display, a user interface for obtaining authenticated user data.

12. The device of any one of claims 1 to 11, wherein the processor is configured to:
receive an input of authenticated user data;
obtain a third image capturing the space ahead of the display;
extract a feature point from the user's face included in the third image and store the extracted feature point; and
obtain the authenticated user data generated based on the feature point.

13. The device of any one of claims 1 to 12, wherein the first image includes consecutive image frames,
wherein the processor is configured to determine that the user's face is included in the first image when the user's face is included in at least one of the consecutive image frames.

14. An operating method of a device for reducing standby power, the method comprising:
identifying whether a first user input is received via an input device for a preset first time period while a display is turned on and a screen is displayed;
obtaining a first image capturing a space ahead of the display when the first user input is not received; and
controlling on/off of the display depending on whether a user's face is included in the first image or whether the user's face included in the first image is recognized as an authenticated user.

15. The method of claim 14, further comprising controlling the display to be turned off when the user's face is not included in the first image.

16. The method of claim 14, or 15, further comprising:
obtaining authenticated user data, wherein the authenticated user data includes user's face data; and
controlling the display to be turned off when the user's face included in the first image is not recognized as the authenticated user.

17. The method of claim 15 or 16, further comprising:
when the user's face is not included in the first image or the user's face included in the first image is not recognized as the authenticated user,
identifying whether a second user input is received via the input device for a preset second time period; and
controlling the display to be turned off when the second user input is not received.

18. The method of claim 17, further comprising:
additionally obtaining a second image capturing the space ahead of the display when the second user input is not received; and
controlling the on/off of the display depending on whether the user's face is included in the second image or whether the user's face included in the second image is recognized as the authenticated user.

19. The method of any one of claims 14 to 18, further comprising:
controlling the display to be continuously turned on when the user's face included in the first image includes a plurality of faces and at least one of the faces is recognized as the authenticated user; and
identifying whether a third user input is received via the input device for a preset third time period while the display is turned on and the screen is displayed,
wherein the third time period is a time period set for the recognized authenticated user.

20. The method of any one of claims 14 to 19, further comprising:
receiving an input of authenticated user data;
obtaining a third image capturing the space ahead of the display;
extracting a feature point from the user's face included in the third image and storing the extracted feature point; and
obtaining the authenticated user data generated based on the feature point.
